# EUROPEAN PATENT SPECIFICATION

(11) **EP 3 261 193 B1**
(45) Date of publication and mention of the grant of the patent: **28.11.2018**
(21) Application number: 16175265.4
(22) Date of filing: 20.06.2016
(51) Int. Cl.: H01R 13/6582, G02B 6/42, H01R 13/6596

(54) **ENCLOSURE ASSEMBLY FOR A CONNECTOR**
GEHÄUSEANORDNUNG FÜR EINEN VERBINDER
ENSEMBLE ENCEINTE POUR UN CONNECTEUR

(43) Date of publication of application: 27.12.2017
(73) Proprietor: TE Connectivity Nederland B.V., 5222 AR 's Hertogenbosch (NL); Tyco Electronics Svenska AB, 194 26 Upplands Väsby (SE)
(72) Inventor: CAMPSCHROER, Dolf, 6601 XA Wijchen (NL); HYVING, Håcan, 82132 Bollnäs (SE); DAAMEN, Ronald Nico Adriaan, 5262 DG Vught (NL); VAN HET BOLSCHER, Han, 5038 KS Tilburg (NL); MOONEN, William, 5045 NM Tilburg (NL); DRIJFHOUT, Tekke, 5388 CG Nistelrode (NL)
(74) Representative: Grünecker Patent- und Rechtsanwälte PartG mbB

(56) References cited:
- EP-A1- 2 579 396
- WO-A1-2010/046735
- US-A1- 2006 279 937
- US-A1- 2008 047 746
- US-A1- 2008 315 528

## Description

The present invention relates to an electromagnetic shielding structure for use as electromagnetic noise attenuator, electromagnetic shielding suppressing device or high frequency noise attenuator. The structure comprises a tubular hollow body comprising at least three contact springs arranged in a ring-like configuration, wherein each arm of the at least three contact springs comprises a section that projects radially outwards, a section of a bend and a tongue section.

In the following, the direction "forward" is defined for the enclosure assembly as facing in the direction of the optional mating enclosure, or the end of the cable, as seen from the enclosure assembly. The direction "rearward" designates the opposite direction, i.e. the direction facing away from the optional mating enclosure. If the enclosure assembly is mounted or being mounted on a cable, the forward and rearward direction run parallel to the cable.

The enclosure assembly constitutes a protective shell around the preferably standardized connector, which may be, within others, small form factor pluggable (SFP), high speed IO (micro SFP) (HSIO), multi fiber push on (MPO), mass transfer push on (MTP), high definition multimedia interface (HDMI), optical transceivers, RJ45, or any other standardized connector. The connector volume is both large enough to allow accommodation of various sizes of connectors for multiple connectors in a side-by-side arrangement without the need to change the inner and/or outer body of the enclosure assembly. Thus, the same enclosure assembly may be used for different connectors.

The connector volume is of sufficient size to allow a moveable accommodation, i.e. the connector is free to move within the connector volume. Thus, the position of the connector within the connector volume may be changed and tolerances can be compensated. Both the connector can be safely mated with their respective counterparts.

Such an enclosure assembly is e.g. known from European patent applications EP2302431. The disclosure is related to a sealing enclosure assembly for a connector on a cable, including a cable seal adapted to sealingly engage the cable, an inner body comprising a connector volume adapted to receive the connector, and an outer body adapted to slide over the inner body to a forward position. The sealing enclosure and a mating enclosure are axially secured in the forward position by a locking element. The locking element may be of the bayonet-type. Such an enclosure is easy to be assembled and mounted on side and protects and reliably seals the connector from harsh environmental conditions, such as in outdoor applications. The bayonet-type is advantageous as it combines the forward motion, which leads to the sealing of the connector volume by the sealing member at the rearward end of the enclosure, with a limited rotational locking motion for the axial lock. Due to the limited rotational motion, the torsion introduced into the sealing member is limited in the bayonet-type style locking element.

Other enclosures are known from the US7338214. In this reference the inner body is shown to be configures as plug body and the outer body as shell, which has a bayonet-style locking section. In the plug body and the mating enclosure, standardizes connectors are fixable mounted at a predetermined position within the enclosure.

A similar enclosure assembly is disclosed also in the EP2354825 where, to facilitate and thus ensure the sealing of the connector volume at the rearward end, the inner body may be provided with a clamping section which may open in the rearward direction. Thus the sealing member may slid along a strain relief element into the clamping section. The clamping section may have a retainer which is open in the rearward direction for receiving the sealing member. In the forward position of the outer body, the clamping section may be radially compressed onto the sealing member, which in turn is radially pressed onto the fastening portion of the strain relief element and the sealing member. This makes the enclosure assembly more suitable to stand also torsional strain.

The reference EP2579396 discloses a sealing enclosure which is provided with an electromagnetic shielding structure located within the inner body. The signal integrity of the connectors is further improved because the shielding structure protects, not only from harsh environmental conditions and mechanical hazards, as described above, but also from electromagnetic fields, electromagnetic noise and lightning strikes. The connector located within the connector volume is, in most cases, already provided with shielding according to the specification of the respective standard. The enclosure assembly adds extra protection without limiting the movability of the connector within the connector volume. By locating the electromagnetic shielding structure within the inner body, the interaction of the inner and outer body, as e.g. known from the EP2302431 and EP2354825 remains unchanged. The electromagnetic shielding structure constitutes an additional barrier against mechanical impact after the outer and inner body have failed. The electromagnetic shielding structure of the mentioned reference is made from one or more essentially tubular solid wall elements.

The electromagnetic shielding structure may comprise a moveable shielding substructure and a fixed shielding substructure. The movable shielding substructure is adapted to slid over the cables and to be held, at least with respect to a movement of the inner body towards the forward position and/or the forward direction, by the inner body. The inner body and the moveable shielding substructure are handled as a unit. The moveable shielding substructure may be moved together with the inner body. The moveable shielding substructure may be preassembled with the inner body before the inner body is slid in the forward direction.

The fixed shielding substructure is adapted to be fixed on the cable and to be slid over by the moveable substructure of the electromagnetic shielding structure in the forward direction. In this configuration, the electromagnetic shielding structure essentially mirrors the structure of the enclosure assembly by providing a part to be mounted on the cable and a part to be moved along the cable.

The moveable and fixed substructures are automatically connected to each other in an electrically conductive manner during a movement of the inner body in the forward direction, such as a movement in the operation position. An operator does not need to care about connecting the moveable and the fixed shielding substructure in the field, as this connection is established once the inner body is moved forward towards its operating position. The connection of the fixed and moveable shielding substructure may be located at the removal section and/or end of the connector volume, preferably outside the connector volume.

The fixed shielding substructure and the moveable shielding substructure are connected to each other via radially deflectable contact spring. The contact springs may be part of a ring-like additional element, which is mounted on the end of the moveable shielding substructure.

Document WO 2010/046735A1 shows a shielded connector, in which a shield member having a shield wall is applied for protecting spring members, belonging to a spring element, against overbending

In US 2008/0315528 A1 a gasketed collar for reducing electromagnetic interference emission from an optical communication module is shown. The gasketed collar comprises a u-shaped collar clip for holding a u-shaped gasket.

A gasket retainer is shown in US 2006/0279937 A1 having upstanding edge portions or fingers for accurately aligning and holding a conducting gasket.

In US 2008/0047746 A1 a shield assembly with gasket is shown, wherein a main portion with a plurality of resilient tabs projecting from an inner surface, such that the main portion is placed upon a front end portion of a cage.

The EP2579396 discloses two contact springs, one at the rearward end and one at the forward end. The contact spring at the rearward end serves to contact the fixed shielding substructure. The contact spring at the forward end serves to contact a mating enclosure, which may be a bulkhead on a cabinet. The contact spring can be a ring like structure comprising a plurality of contact springs arranged side by side along the peripheral direction. The spring fingers are radially deflectable.

At the rearward end, the contact spring may project radially inwards and be in contact with the fixed substructure. At the forward end the contact spring may be arranged on the outer surface of the fixed shielding element. The tongues of the plurality of contacts springs may be elastically pressed against the shielding element. The outer body slid over the inner body and the enclosure assembly is coupled to the mating enclosure.

During the last assembly steps, the spring fingers or contact springs in the forward end may be exposed to external stress and can easily get damaged.

It is therefore an object of the present invention to provide an electromagnetic shielding structure having resistant and stable contact springs with reliable mechanical behavior. The object is solved by the subject matter of the independent claim 1. Advantageous embodiments of the present invention are subject matter of the dependent claims.

According to claim 1 the invention provides an electromagnetic shielding structure for use as protection of connectors, especially fiber optical transceivers and fiber optical cable connectors, comprising a tubular hollow body comprising at least three contact springs arranged in a ring-like configuration characterized by a springs protection inner housing that is pre-assembled within the contact springs and protecting the contact springs, wherein the springs protection inner housing comprises a section pointing outwards, a central section and an end forward section having the shape of a circumferential lip, wherein the central section has a U-shaped cross section against which the tongue sections are elastically pressable.

The protection inner housing is a protection hood already incorporated at the end of the shielding structure, which holds and protects the contact springs and prevents them from damages during handling. The ring-like configuration allows the shielding structure to symmetrically fit into the available connectors sealing enclosures and mating counterpart.

According to a further development, the tubular hollow body is a unitary body and is made of metal with the contact spring fingers shaped at the end of the body. This has the advantage that the manufacturing process steps to obtain such a structure are reduced, the tube can be manufactured with a deep drawn molding process, or molding and forming process. Also the overall structure is quite stable, the infield assembly steps are minimized, and the possibility of handling mistakes from the operator is reduced. The metallic structure enables establishing a conductive contact.

In a further improvement, the contact springs are a plurality of contact springs distributed on at least one end of the structure.

Additionally, the contact springs are arranged in a radially deflectable configuration, which assure flexibility during operation.

The contact spring may be made from a material like copper alloy, zinc alloy, stainless steel.

The invention also discloses that the springs protection inner housing is made of plastic or metal, for easy processability.

According to a further embodiment the springs protection inner housing has a circular shape and a cross section shaped to fit into the electromagnetic shielding tube and limit the movement of the contact springs. One part of the inner housing follows the profile of the contact springs. In particular, the longest side of the springs is in contact or almost in contact with the inner housing overall the all length, which results in reduced movement options for the springs.

In a further development the springs protection inner housing has a circular shape and has a circumferential lip that protects the free end of the contact springs so that no entangling with a wire or similar can happen during transport.

According to a further embodiment the invention also related to an enclosure assembly for at least one connector comprising a connector volume located within an inner body of the enclosure, the connector volume being adapted to moveably accommodate the connector, the inner body having openings at the forward and rearward ends, an outer body adapted to slid over the inner body, and an electromagnetic shielding structure located between the inner body and the connector volume of the enclosure. The enclosure assembly according to the invention is particularly suited for fiber optic connectors and fiber optical transceivers.

To increase the amount of data that can be handled, the frequency of antennas is getting higher, the systems are getting more vulnerable and are producing more electric magnetic interference. The electromagnetic shielding tube is an add-on shield that can be used in antenna systems, in particular fiber to antenna systems. In particular the electromagnetic shielding tube is used in fiber to antenna technology which is part of the wireless communication application. The fiber optic cable connector is connected to the transceiver in the remote radio unit and protected by a sealing enclosure assembly such as described above. In the remote radio unit the optical high frequency signal is transferred to an electrical high frequency signal that is susceptible for the electromagnetic shielding tube. The electromagnetic shielding tube increases the depth of the opening in the remote radio unit thereby preventing frequency noise to enter or leave the cabinet and disturb high frequency data transmission. The existing wireless communication system technology may therefore be increased from 4 GHz to 10 GHz and 5 Gbps to 10 Gbps in the fiber optical transceiver.

The electromagnetic shielding structure, consist out of a metal pipe or hollow tube that has contact spring fingers on one end.

As the contact springs fingers can be easily damaged by wrong mounting the electromagnetic shielding tube, the spring protection inner housing is pre-assembled in the system. The hood also provides the possibility to press, by pushing the lip, the electromagnetic shielding structure in the inner housing or body of an enclosure assembly.

According to a further embodiment of the present invention, the contact springs are located at its forward end so that an electrical contact with the inside opening in the metal cabinet can be established. The electrical contact takes place at a forward end of the connector volume between the contact springs and an inner layer of the application enclosure hole or remote unit bulkhead.

The contact springs at the forward end may point outwards, so that they don't project into the connector volume, where they may interfere with the freely moveable connector.

The electromagnetic shielding structure is suitable to be inserted and combined with different outer housings.

The electromagnetic shielding structure, as described above, is one piece metal part, and this has the advantage of preventing passive intermodulation distortion, which may instead occur for systems consisting in an assembly of metal contact springs and shields.

In a further development, the body of the electromagnetic metallic shielding structure has at least two retention embossed features to fix the tube in the inner body of the enclosure assembly.

The electromagnetic shielding structure can be used in the fiber to antenna system technology which is part of the wireless communication.

Further features and advantages will become apparent from the following and more detailed description of the invention as illustrated in the accompanying drawings, in which:
Fig. 1 shows the electromagnetic shielding structure according to the invention;
Fig. 2 a and b show each a schematic view of the electromagnetic shielding structure inserted in a inner housing having different geometries;
Fig. 3 shows a schematic view of the enclosure assembly according to the invention;
Fig. 4 shows a schematic and perspective view of one assembly step of the enclosure assembly of Fig 3;
Fig. 5 shows a section of the inner body with the electromagnetic shielding structure located within the inner body mounted in the bulkhead of the remote radio unit and contacting the inner hole of the remote radio unit.

The present invention will now by more fully described hereinafter with reference to the accompanying drawings, in which exemplary embodiments of the invention are shown. The present invention may, however, be embodied in many different forms and should not be construed as limited to the embodiments set forth herein.

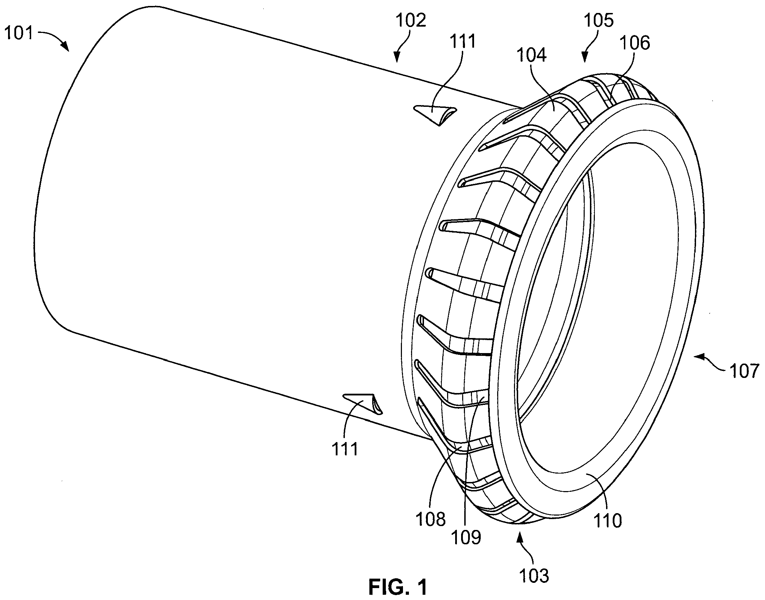

In Fig. 1 shows the electromagnetic shielding structure 101 according to the invention. The structure consists of a unitary cylindrical or tubular hollow body 102 where the diameters at the rearward end and forward end are the same. Alternatively the diameter at the rearward end may be smaller than the diameter at the forward end. On at least one end, preferably the forward end, the structure has a modified geometry to incorporate the contact springs elements 103. The contact springs are prolongations of the tubular body itself which are built within the structure. The contact springs consists of spring arms or elements which are arranged along the peripheral direction. The spring arms or elements are arranged in a ring-like configuration and preferably in a radially deflectable configuration. Alternatively the spring elements are arranged in a ring-like structure which can be detached and attached to the tubular body. Each arm of the contact spring consists out of three sections. The section 104 projects radially outwards, makes a bend in section 105 and turns into a tongue section 106 projecting inwards.

The tubular body of the shielding structure may be made of a metallic material like copper alloy, stainless steel, nickel, zinc alloy, while the contact springs are made of the same metallic material of the tubular body and are preferably nickel plated, tin plated, silver plated, gold plated, palladium-nickel plated, or treated with other kind of plating suitable for the contact with the inner hole of the application housing.

The spring arms are radially deflectable. By operating the system, the spring arms will be subject to external stress which may cause fractures and even rupture. In order to provide an electromagnetic shielding structure having resistant and stable contact springs with reliable mechanical behavior, and prevent damages of the string arms during handling, a spring protection inner housing 107 is pre-assembled within the contact springs. The protection inner housing is a protection hood already incorporated at the end of the shielding structure, which holds the contact springs. The protection hood has a geometry which fits the contact spring geometry, in particular has a circular shape and a cross section shaped to fit into the electromagnetic shielding tube and limit the movement of the contact springs. The protection hood is designed as a tube that is inserted inside the EMI tube and locked in the inside of the retention features. The cross section of the protection hood is shaped to fit into the EMI tube, support contact springs, and protect the contact springs for damage when blind mated. For example the protection hood has a section 108 pointing outwards, a central section 109 shaped in such a way to facilitate grip of the contact springs and an end forward section having the shape of a disk or circumferential lip 110 that protects the free end of the contact springs so that no entangling with a wire or similar can happen during transport. The central section 109 has a U shaped cross section on which the tongues 106 are elastically pressed against. As can be seen in Fig. 1 the shielding tube is also characterized by retention features 111 located on the surface of the tubular body, close to the forward end. The retention features can be two, preferably from 2 to 12, most preferably from 2 to 6, most preferably from 2 to 4. The retention features have the function to fix the shielding structure when it is placed within other bodies, as for example the inner body of a sealing enclosure described below in more details.

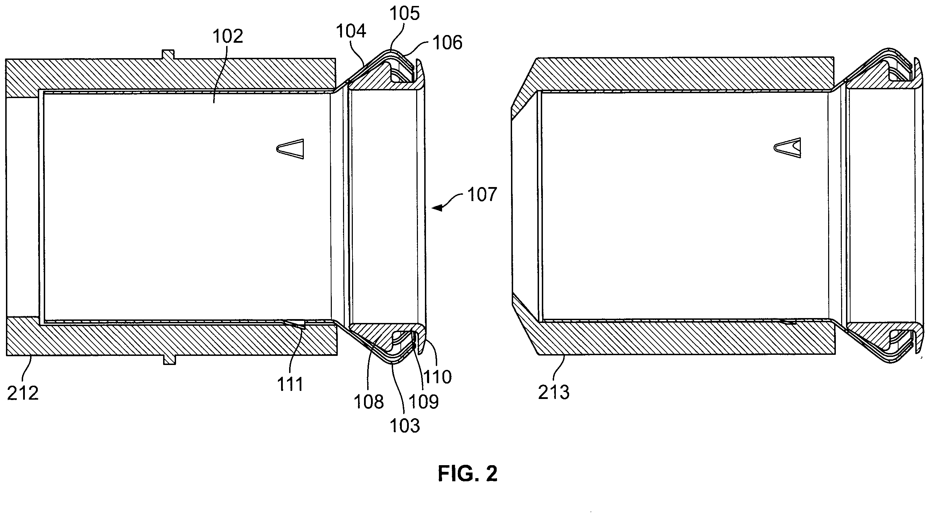

Fig. 2 shows the electromagnetic shielding tube inserted in two different types of inner housings 212, and 213. The shielding tube is fixed within the inner housing by mean of the retention features 111.

The frontal disk shaped part 110 has the main function of protecting the spring fingers from damaging, when blind mated to the bulkhead and application. Additionally, the frontal part helps avoiding slippage of the spring arms to the front and further can be used to press the tube in the plastic inner housing.

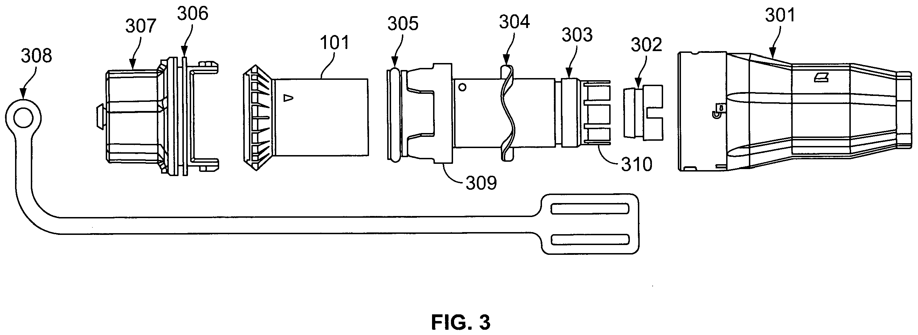

The inner housing can for example be the inner body of the enclosure assembly of Fig. 3. The enclosure assembly is adapted to contain, without any modification to its structure, different kind of cables, like fibre-optic cables. Further the enclosure is adapted to sealingly enclose connectors mounted on an end of the cables, such as, within others, small form factor pluggable (SFP), high speed IO (micro SFP) (HSIO), multi fiber push on (MPO), mass transfer push on (MTP), high definition multimedia interface (HDMI), optical transceivers, RJ45 or any other type of connectors, for power and or data transmission.

The enclosure assembly comprises an outer body 301, an inner body 303, the shielding structure 101, a retainer or cable seal 302, and a front seal 306.

The outer body 301 of the enclosure assembly is adapted to slide over the inner body 303 in the forward direction, with a sliding movement, and can be secured in the forward position to a mating enclosure 306 by a locking element after a rotating movement.

The outer body 301 can be out of plastic and has a shape of a cylindrical or frusto-conical hollow shell. The length of the outer body in the longitudinal direction is about the same as the length of the inner body 303.

The inner body 303 has a cylindrical shape and is adapted to be mounted on and slid along the cable. The inner body has a clamping section 310 located at the rearward end and a plug section 309 located at the forward end. The inner walls of the inner body define the connector volume. The connector volume is dimensioned to loosely receive the connector in the forward direction. It has a cylindrical, of generally conical shape tapering in the rearward direction. The sealing at the forward end is established or reinforced by the O-ring 305. The central section of the inner body, supports the instalment and sliding of the inner body on the cable.

The wave spring functions as a back spring to the outer body to ensure the locking of the bayonet lock.

The electromagnetic shielding structure 101 is located between the inner body and the connector volume of the enclosure with the contact spring located preferably at the forward end. It is preferred that the diameter at which the contact springs are arranged is the same or at least almost the same to the inner diameter of the connector volume.

The electromagnetic shielding structure 101 is covered almost completely by the inner body 303, with the exception that at the forward end the spring contact will look out to assure connection with the inside of the hole of the application housing. Differently there would be the risk of losing contact points and having the EMI tube stuck inside the housing. The spring fingers don't project into the connector volume as this may create interference with the freely moveable cables and connectors.

The cable plug dust cap 307 acts as protection during transportation while the O-ring front seal 306 protects from dust and water inside the dust cap. The dust cup is secured to the cable assembly for later use after installation by the plug cap strap or wire 308.

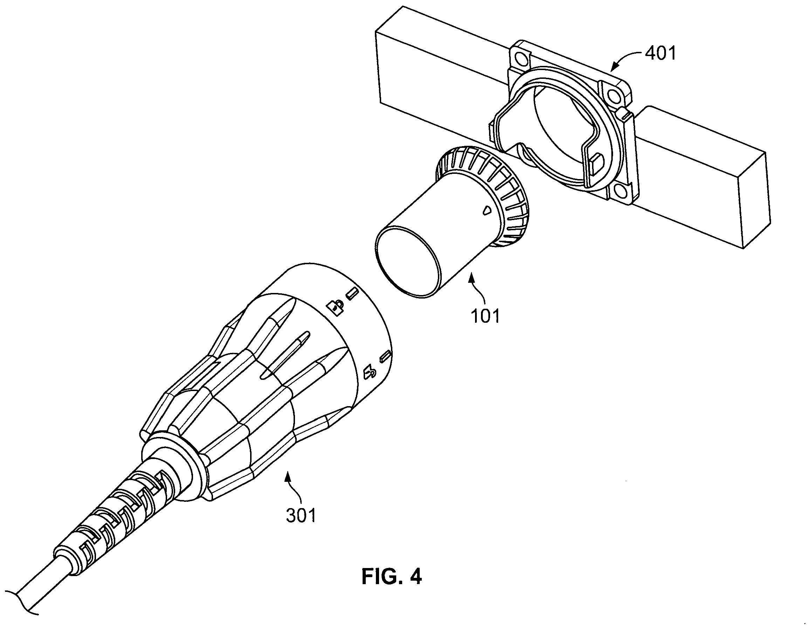

Fig 4 represents in perspective the initial operation phases. The electromagnetic shielding tube is first inserted into the inner body 303 of the FullAXS plug. The outer body of the enclosure assembly is then slid forward on the cable over the inner body and shielding structure. At this stage, the rearward end of the inner body 303 is covered completely by the outer body 301 and then mated to the bulkhead 401 mounted on the application enclosure housing 501 by means of locking elements.

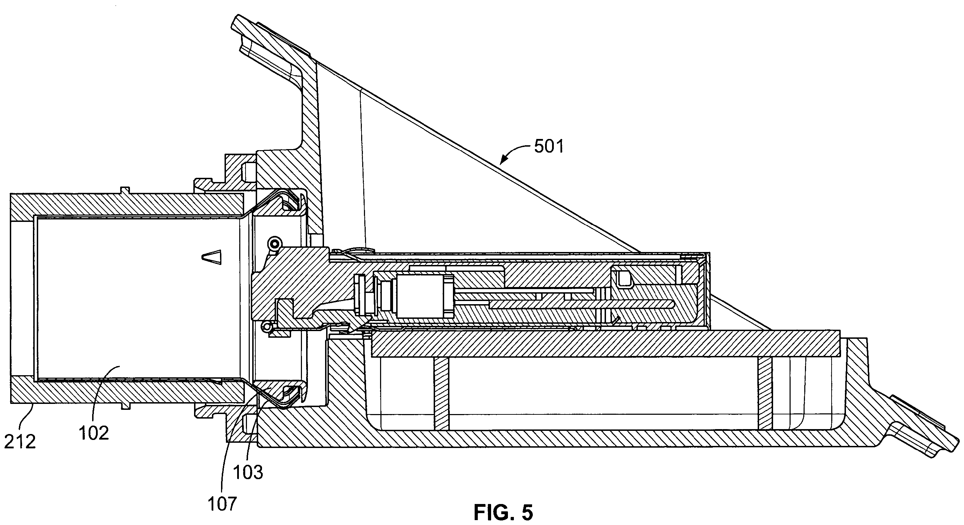

Fig. 5 shows the enclosure assembly, in particular a section of the inner body with the electromagnetic shielding tube and contact springs coupled with the remote radio unit. An electrical contact is established within the outer surface of the contact spring and the inner surface of the bulkhead and/or the inner hole of the remote radio unit. Same kind of contact can be established with other types of application products.

As the EMI tube connects to the inside of the hole of the application housing 501 with the spring fingers 103, the EMI tube is plated with a material that works well with the plating of the inside of the hole.
- 101: electromagnetic shielding structure
- 102: tubular hollow body
- 103: contact springs
- 104: section contact springs projecting radially outwards
- 105: bend in section contact springs
- 106: tongue section contact springs projecting inwards
- 107: spring protection inner housing
- 108: section spring protection inner housing pointing outwards
- 109: central section spring protection inner housing
- 110: circumferential lip section spring protection inner housing
- 111: retention features
- 212: inner housing
- 213: inner housing with different geometry
- 301: outer body
- 302: retainer or cable seal
- 303: inner body
- 304: wave spring
- 305: O-ring
- 306: front seal
- 307: cable plug protection cap
- 308: plug cap strap
- 401: bulkhead
- 501: application enclosure housing

## Claims

1. Electromagnetic shielding structure (101) for use as protection of connectors, especially fiber optical transceivers and fiber optical cable connectors, comprising a tubular hollow body (102) comprising at least three contact springs (103) arranged in a ring-like configuration, wherein each arm of the at least three contact springs (103) comprises a section (104) that projects radially outwards, a section (105) of a bend and a tongue section (106) that projects inwards, **characterized by** a springs protection inner housing (107) that is pre-assembled within the contact springs (103) and protecting the contact springs (103), wherein the springs protection inner housing (107) comprises a section (108) pointing outwards, a central section (109) and an end forward section having the shape of a circumferential lip (110), wherein the central section (109) has a U-shaped cross section against which the tongue sections (106) are elastically pressable.

2. The electromagnetic shielding structure (101) according to claim 1 **characterized in that** the tubular hollow body (102) is a unitary body and is made of metal.

3. The electromagnetic shielding structure (101) according to claim 1 **characterized in that** the contact springs (103) are distributed on at least one end of the structure.

4. The electromagnetic shielding structure (101) according to claim 1 **characterized in that** the contact springs (103) are arranged in a radially deflectable configuration.

5. The electromagnetic shielding structure (101) according to claim 1 **characterized in that** the springs protection inner housing (107) is made of plastic or metal.

6. The electromagnetic shielding structure (101) according to claim 1 **characterized in that** the springs protection inner housing (107) has a circular shape and a cross section shaped to fit into the electromagnetic shielding tube and limit the movement of the contact springs (103).

7. The electromagnetic shielding structure (101) according to claim 1 **characterized in that** the springs protection inner housing (107) has a circular shape and that the circumferential lip (110) protects the free end of the contact springs (103).

8. Enclosure assembly for at least one connector comprising:
a connector volume located within an inner body of the enclosure, the connector volume being adapted to moveably accommodate the connector, the inner body (303) having openings at the forward and rearward ends,
an outer body (301) adapted to slid over the inner body (303),
an electromagnetic shielding structure (101) located between the inner body (303) and the connector volume of the enclosure, the electromagnetic shielding structure (101) being according to claims 1 to 7.

9. The enclosure assembly according to claim 8 **characterized in that** the contact springs (103) are located at its forward end

10. An enclosure assembly according to claim 9 **characterized in that** an electrical contact takes place at a forward end of the connector volume, the electrical contact taking place between the contact springs (103) and an inner layer of the application enclosure hole

11. The enclosure assembly according to claim 8 **characterized in that** the body (102) of the electromagnetic metallic shielding structure (101) has at least two retention features (111).

12. The enclosure assembly according to claim 11 **characterized in that** the electromagnetic metallic shielding structure (101) is connected to the inner body (303) by means of the two retention features (111).

## Patentansprüche

1. Struktur zur elektromagnetischen Abschirmung (101) zur Verwendung als Schutz von Verbindern, insbesondere von faseroptischen Sendern/Empfängern und faseroptischen Kabelverbindern, mit einem rohrförmigen hohlen Körper (102), mit mindestens drei Kontaktfedern (103), die in einer ringartigen Konfiguration angeordnet sind, wobei jeder Arm der mindestens drei Kontaktfedern (103) einen Abschnitt (104), der radial nach außen hervorsteht, einen Abschnitt (105) mit Biegung und einen Zungenabschnitt (106) aufweist, der nach innen hervorsteht,
**gekennzeichnet durch**
ein Federschutzinnengehäuse (107), das innenliegend zu den Kontaktfedern (103) vormontiert ist und die Kontaktfedern (103) schützt, wobei das Federschutzinnengehäuse (107) einen Abschnitt (108), der nach außen zeigt, einen zentralen Abschnitt (109) und einen vorderen Endabschnitt aufweist, der die Form einer Umfangslippe (110) hat, wobei der zentrale Abschnitt (109) einen U-förmigen Querschnitt hat, an den die Zungenabschnitte (106) elastisch andrückbar sind.

2. Struktur zur elektromagnetischen Abschirmung (101) nach Anspruch 1, **dadurch gekennzeichnet, dass** der rohrförmige hohle Körper (102) ein einheitlicher Körper ist und aus Metall hergestellt ist.

3. Struktur zur elektromagnetischen Abschirmung (101) nach Anspruch 1, **dadurch gekennzeichnet, dass** die Kontaktfedern (103) auf mindestens einem Ende der Struktur verteilt sind.

4. Struktur zur elektromagnetischen Abschirmung (101) nach Anspruch 1, **dadurch gekennzeichnet, dass** die Kontaktfedern (103) in einer radial auslenkbaren Konfiguration angeordnet sind.

5. Struktur zur elektromagnetischen Abschirmung (101) nach Anspruch 1, **dadurch gekennzeichnet, dass** das Federschutzinnengehäuse (107) aus Kunststoff oder Metall hergestellt ist.

6. Struktur zur elektromagnetischen Abschirmung (101) nach Anspruch 1, **dadurch gekennzeichnet, dass** das Federschutzinnengehäuse (107) eine runde Form und einen Querschnitt hat, der so geformt ist, dass er in das elektromagnetische Abschirmrohr passt und die Bewegung der Kontaktfedern (103) begrenzt.

7. Struktur zur elektromagnetischen Abschirmung (101) nach Anspruch 1, **dadurch gekennzeichnet, dass** das Federschutzinnengehäuse (107) eine runde Form hat und dass die Umfangslippe (110) das freie Ende der Kontaktfedern (103) schützt.

8. Gehäuseanordnung für mindestens einen Verbinder, mit:
einem Verbindervolumen, das in einem Innenkörper des Gehäuses angeordnet ist, wobei das Verbindervolumen ausgebildet ist, den Verbinder so aufzunehmen, dass er beweglich ist, wobei der Innenkörper (303) Öffnungen an dem vorderen und hinteren Ende aufweist,
einem Außenkörper (301), der ausgebildet ist, über den Innenkörper (303) geschoben zu werden,
einer Struktur zur elektromagnetischen Abschirmung (101), die zwischen dem Innenkörper (303) und dem Verbindervolumen des Gehäuses angeordnet ist, wobei die Struktur zur elektromagnetischen Abschirmung (101) gemäß den Ansprüchen 1 bis 7 ausgebildet ist.

9. Gehäuseanordnung nach Anspruch 8, **dadurch gekennzeichnet, dass** die Kontaktfedern (103) am vorderen Ende angeordnet sind.

10. Gehäuseanordnung nach Anspruch 9, **dadurch gekennzeichnet, dass** ein elektrischer Kontakt an einem vorderen Ende des Verbindervolumens hergestellt wird, wobei der elektrische Kontakt zwischen den Kontaktfedern (103) und einer Innenschicht einer Bohrung zum Anbringen des Gehäuses hergestellt wird.

11. Gehäuseanordnung nach Anspruch 8, **dadurch gekennzeichnet, dass** der Körper (102) der metallischen Struktur zur elektromagnetischen Abschirmung (101) mindestens zwei Haltestrukturen (111) aufweist.

12. Gehäuseanordnung nach Anspruch 11, **dadurch gekennzeichnet, dass** die metallische Struktur zur elektromagnetischen Abschirmung (101) mit dem Innenkörper (303) durch die zwei Haltestrukturen (111) verbunden ist.

## Revendications

1. Structure de protection électromagnétique (101) pour l'utilisation comme protection de connecteurs, spécialement d'émetteurs-récepteurs de fibre optique et de connecteurs de câble de fibre optique, comprenant un corps tubulaire creux (102) comprenant au moins trois ressorts de contact (103) disposés en une configuration semblable à un anneau, où chaque bras des au moins trois ressorts de contact (103) comprend une section (104) qui se projette radialement vers l'extérieur, une section (105) d'une flexion et d'une section en langue (106) qui se projette vers l'intérieur, **caractérisée par** un logement interne de protection des ressorts (107) qui est préassemblé à l'intérieur des ressorts de contact (103) et protégeant les ressorts de contact (103), le logement interne de protection des ressorts (107) comprend une section (108) pointant vers l'extérieur, une section centrale (109) et une section avant d'extrémité présentant la forme d'une lèvre circonférentielle (110), où la section centrale (109) présente une coupe transversale en forme de U contre laquelle les sections en langue (106) peuvent être élastiquement comprimées.

2. Structure de protection électromagnétique (101) selon la revendication 1 **caractérisée en ce que** le corps tubulaire creux (102) est un corps unitaire et est constitué de métal.

3. Structure de protection électromagnétique (101) selon la revendication 1 **caractérisée en ce que** les ressorts de contact (103) sont répartis sur au moins une extrémité de la structure.

4. Structure de protection électromagnétique (101) selon la revendication 1 **caractérisée en ce que** les ressorts de contact (103) sont disposés en une configuration radialement déflectable.

5. Structure de protection électromagnétique (101) selon la revendication 1 **caractérisée en ce que** le logement interne de protection des ressorts (107) est constitué de matière plastique ou de métal.

6. Structure de protection électromagnétique (101) selon la revendication 1 **caractérisée en ce que** le logement interne de protection des ressorts (107) présente une forme circulaire et une coupe transversale façonnée pour s'ajuster dans le tube de protection électromagnétique et limiter le mouvement des ressorts de contact (103).

7. Structure de protection électromagnétique (101) selon la revendication 1 **caractérisée en ce que** le logement interne de protection des ressorts (107) présente une forme circulaire et **en ce que** la lèvre circonférentielle (110) protège l'extrémité libre des ressorts de contact (103).

8. Ensemble enceinte pour au moins un connecteur comprenant :
un volume connecteur localisé à l'intérieur d'un corps interne de l'enceinte, le volume connecteur étant adapté pour loger mobile le connecteur, le corps interne (303) présentant des ouvertures aux extrémités avant et arrière,
un corps externe (301) adapté pour coulisser sur le corps interne (303),
une structure de protection électromagnétique (101) localisée entre le corps interne (303) et le volume connecteur de l'enceinte, la structure de protection électromagnétique (101) se présentant selon les revendications 1 à 7.

9. Ensemble enceinte selon la revendication 8 **caractérisé en ce que** les ressorts de contact (103) sont localisés au niveau de son extrémité avant.

10. Ensemble enceinte selon la revendication 9 **caractérisé en ce qu'**un contact électrique a lieu à une extrémité avant du volume connecteur, le contact électrique ayant lieu entre les ressorts de contact (103) et une couche interne du trou d'enceinte de l'application.

11. Ensemble enceinte selon la revendication 8 **caractérisé en ce que** le corps (102) de la structure de protection métallique électromagnétique (101) présente au moins deux éléments de rétention (111).

12. Ensemble enceinte selon la revendication 11 **caractérisé en ce que** la structure de protection métallique électromagnétique (101) est reliée au corps interne (303) à l'aide de deux éléments de rétention (111).
